Europäisches Patentamt

European Patent Office

Office européen des brevets

(19)

(11) Veröffentlichungsnummer: **0 301 357 B1**

# EUROPÄISCHE PATENTSCHRIFT

(12)

(45) Veröffentlichungstag der Patentschrift: **07.10.92**

(21) Anmeldenummer: **88111542.2**

(22) Anmeldetag: **18.07.88**

(51) Int. Cl.⁵: **H02B 1/30**

(54) Vorrichtung zum lösbaren Verbinden zweier benachbarter Schaltschränke.

(30) Priorität: **29.07.87 DE 8710424 U**

(43) Veröffentlichungstag der Anmeldung:
**01.02.89 Patentblatt 89/05**

(45) Bekanntmachung des Hinweises auf die
Patenterteilung:
**07.10.92 Patentblatt 92/41**

(84) Benannte Vertragsstaaten:
**AT DE GB NL**

(56) Entgegenhaltungen:
**DE-B- 1 590 367**
**US-A- 3 303 937**
**US-A- 4 433 881**
**US-E- 24 009**

(73) Patentinhaber: **SIEMENS AKTIENGESELL-
SCHAFT**
**Wittelsbacherplatz 2**
**W-8000 München 2(DE)**

(72) Erfinder: **Müller, Rolf, Dipl.-Ing.**
**Ludwigstrasse 6**
**W-8753 Obernburg(DE)**
Erfinder: **Gronemann, Karl-Heinz, Dipl.-Ing.**
**Talstrasse 13**
**W-6057 Dietzenbach(DE)**

## Beschreibung

Die Erfindung betrifft eine Vorrichtung zum lösbaren Verbinden zweier benachbarter elektrischer Schaltschränke, mit den Merkmalen:

a) es ist eine Verbindungsschiene vorgesehen, mit der durch Verschieben längs des Stoßes der benachbarten Schaltschränke ein zwischen den Schaltschränken bestehender Stoßspalt aufhebbar ist;

b) die Verbindungsschiene ist durch mindestens eine Schraubverbindung in ihrer Verbindungslage festhaltbar.

Eine Vorrichtung dieser Art ist durch die EP-A-0 189 061 bekannt geworden. Die bekannte Vorrichtung weist außer einem Spannschieber bzw. einer Verbindungsschiene zwei Spannwinkel auf. Der Spannschieber und die Spannwinkel bilden eine Keilverbindung, die an inneren Profilwänden von vertikalen Rahmenschenkeln angeordnet sind, die Bestandteile der Gerüste der zu verbindenden benachbarte Schaltschränke sind. Die aus dem Spannschieber und den beiden Spannwinkeln bestehende Keilverbindung befindet sich infolge ihrer Anordnung an den Innenseiten der Rahmenschenkel innerhalb der benachbarten Schaltschränke. Daher ist es schwierig, die bekannte Keilverbindung anzubringen oder zu lösen, wenn die Schaltschränke bereits mit Geräten und Leitungen bestückt sind.

Der Erfindung liegt die Aufgabe zugrunde, eine Vorrichtung zur Verbindung von Schaltschränken zu schaffen, die auch bei bereits bestückten Schaltschränken leicht handhabbar ist und die aus nur wenigen Teilen besteht.

Gemäß der Erfindung wird dieser Aufgabe durch folgende Merkmale gelöst:

c) die Verbindungsschiene liegt auf den Kopfwänden der benachbarten Schaltschränke auf;

d) die Verbindungsschiene ist mittels pilzförmiger Elemente, ferner mittels von den Stielen der pilzförmigen Elemente durchgreifbaren sowie von den Köpfen der pilzförmigen Elemente teilweise hintergreifbaren Schlitzen sowie mittels der Schraubvebindung mit den beiden Kopfwänden der Schaltschränke formschlüssig vereinigbar;

e) die pilzförmigen Elemente sind wahlweise von der Verbindungsschiene oder von den Kopfwänden der Schaltschränke getragen und in zwei parallelen Reihen derart angeordnet, daß der Kopfstoß der Schaltschränke schon zu Beginn des Verschiebens der Verbindungsschiene von den beiden Reihen der pilzförmigen Elemente flankiert ist;

f) die Schlitze sind bei Anordnung der pilzförmigen Elemente an der Verbindungsschiene in die Kopfwände der Schaltschränke und bei Anordnung der pilzförmigen Elemente an den Kopfwänden der Schaltschränke in die Verbindungsschiene eingearbeitet;

g) jeder Schlitz beginnt in Schieberichtung der Verbindungsschiene mit einer vom Kopf des zugeordneten pilzförmigen Elemente durchgreifenden verbreiterten Ausnehmung, an die sich ein entgegengesetzt der verbreiteren Ausnehmung konisch verengendes Mittelteil anschließt, das in einem parallele seitliche Begrenzungen aufweisenden Endabschnitt mündet, der vom Schaft des jeweiligen pilzförmigen Elementes in der Bestimmungslage der Verbindungsschiene weitgehend spielfrei durchgreifbar ist;

h) die Schraubverbindung besteht aus einem in einer der Kopfwände der Schaltschränke angeordneten Muttergewinde und einer durch ein Durchgangsloch in der Verbindungsschiene in das Muttergewinde eindrehbaren Schraube;

i) die Verbindungsschiene besteht aus einem rechteckigen Blechzuschnitt, der mindestens an seinen beiden Längskanten zur Versteifung etwa rechtwinklig umgebördelt ist;

j) die Verbindungsschiene weist mindestens an einem Ende einen sich zwischen den beiden Bördelrändern erstreckenden hochgestellten Querrand auf, der als Handhabe für das Verschieben der Verbindungsschiene ausgebildet ist.

Die Verbindungsschiene ist an einem stets zugänglichen Bereich der Schaltschränke, nämlich an den Kopfwänden anzubringen. Ihre Verwendung erfordert darüber hinaus keine vorbereitenden Arbeiten, sondern nur das Aufsetzen der Verbindungsschiene selbst und die nachfolgende Anbringung einer Schraube als Sicherungselement.

Durch die DE-B-1 590 367 ist es bereits bekannt geworden, zur Verbindung der Gerüstelemente von Kabelverteilerschränken pilzförmige Elemente in Verbindung mit von den Köpfen dieser Elemente hintergreifbaren Schlitzen vorzusehen. Ferner ist durch die US-A-3 303 937 ein Pallettenregal bekannt geworden, bei dem horizontale Pallettenträger beidseitig mit pilzförmigen Elementen versehen sind, die in von diesen Elementen zu hintergreifenden Öffnungen versehenen vertikalen Regalstützen einsteckbar sind. In beiden Fällen handelt es sich demnach um die Verbindung der Bestandteile von Gerüsten, nicht dagegen um die Verbindung fertiger Schaltschränke.

Die pilzförmigen Elemente können aus einer Lasche bestehen, die je nach Lage des Schlitzes aus den Kopfwänden der Schaltschränke oder aus der Verbindungsschiene freigelegt und herausgebogen sind. Eine andere Möglichkeit zur Bildung der pilzförmigen Elemente besteht darin, daß die pilzförmigen Elemente aus rotationssymmetrischen Teilen bestehen, die an den Träger angeschweißt oder angenietet oder mit dem Träger verschraubt sind.

Ein Ausführungsbeispiel der Erfindung ist in der Zeichnung rein schematisch dargestellt. Es zeigen:

Figur 1   in perspektivischer Darstellung die Unterseite einer Verbindungsschiene;

Figur 2   in perspektivischer Darstellung die Oberseite einer Verbindungsschiene;

Figur 3   in perspektivischer Darstellung eine Teilansicht zweier benachbarter Schaltschränke und eine strichpunktiert eingezeichnete Verbindungsschiene nach den Figuren 1 und 2 ihrer Bestimmungslage;

Figur 4   in vergrößerter Darstellung einen Umriß eines Schlitzes:

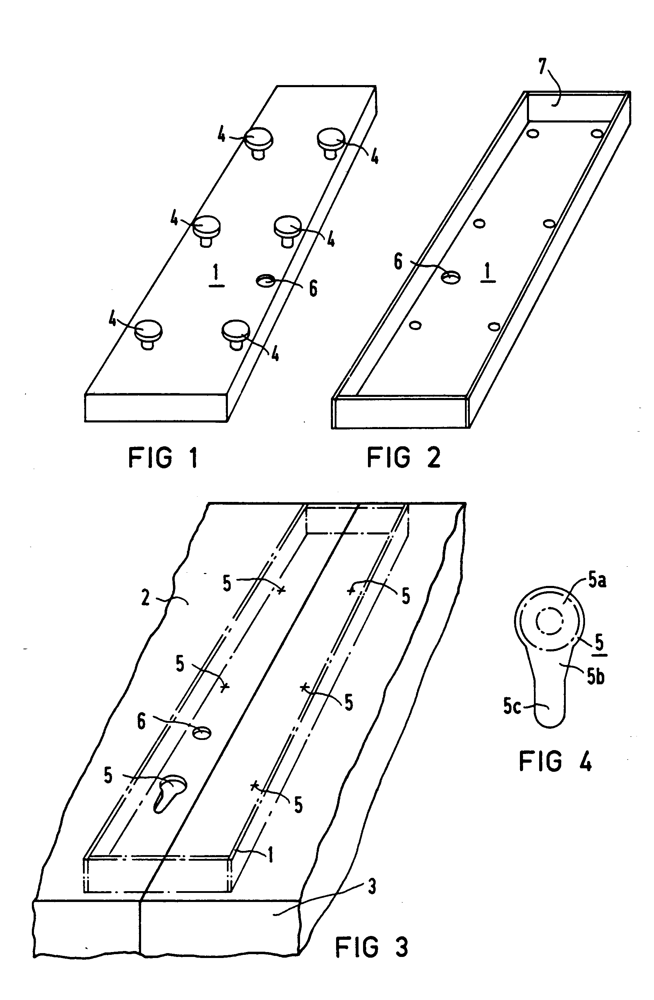

In der Zeichnung ist mit 1 eine Verbindungsschiene bezeichnet, die im dargestellten Beispiel aus einem rechteckigen Blechzuschnitt besteht, dessen Ränder zur Versteifung umlaufend rechtwinklig hochgebogen sind, wie besonders aus Figur 2 und 3 ersichtlich. Die Verbindungsschiene 1 dient zum lösbaren Verbinden zweier aneinanderstoßender Schaltschränke 2, 3 (Figur 3) und ist durch Verschieben entlang des Kopfstoßes der Schaltschränke 2,3 mit den Kopfwänden der Schaltschränke 2,3 vereinigbar. Als Handhabe für die Verschiebung können die sich zwischen den hochgestellten Längsrändern der Verbindungsschiene 1 erstreckenden hochgestellten Querränder 7 dienen. Bei der Vereinigung kommen pilzförmige Elemente 4 mit Schlitzen 5 in Eingriff und zwar so, daß die Stiele der pilzförmigen Elemente 4 jeweils einen der Schlitze 5 durchgreifen und die Köpfe der pilzförmigen Elemente 4 die zugeordneten Schlitze 5 auf einem Teil ihrer Länge hintergreifen. Die Bestimmungslage der Verbindungsschine 1 wird durch eine Schraubverbindung gesichert, die aus einer einzigen, nicht dargestellten Schraube und einem ebenfalls nicht dargestellten Gegengewinde für die Schraube besteht.

Die pilzförmigen Elemente 4 sind im dargestellten Beispiel von der Verbindungsschiene 1 getragen, sie können jedoch auch von den Kopfwänden der Schaltschränke 2,3 getragen sein (nicht dargestellt). Im dargestellten Beispiel bestehen die pilzförmigen Elemente 4 aus rotationssymetrischen Drehteilen, deren Stiele an den Boden der Verbindungsschiene 1 angenietet, angeschraubt oder angeschweißt sind. Als pilzförmige Elemente 4 sind auch Schrauben verwendbar, die unter Zwischenlage geeigneter, die Stiele bildender Unterlegscheiben an der Bestimmungsstelle mit Hilfe von Muttern angeschraubt sein können (nicht dargestellt). Die pilzförmigen Elemente 4 können ferner aus Laschen bestehen, die aus den Kopfwänden der Schaltschränke 2,3 freigestanzt und anschließend aus der zugeordneten Teilebene herausgebogen sind (ebenfalls nicht dargestellt).

Wie aus den Fig. 1 - 3 ersichtlich, sind die pilzförmigen Elemente 4 in zwei parallelen Reihen angeordnet. Diese Reihen sind so gelegt, daß sie schon zu Beginn des Verschiebens der Verbindungsschiene 1 den Kopfstoß der Schaltschränke 2,3 flankieren.

Wenn die pilzförmigen Elemente 4 von der Verbindungsschiene 1 getragen sind, befinden sich, wie in Fig. 3 dargestellt, die Schlitze 5 in den Kopfwänden der Schaltschränke 2,3. Sind dagegen die pilzförmigen Elemente 4 von den Kopfwänden der Schaltschränke 2,3 getragen, müssen die Schlitze 5 in der Verbindungsschiene 1 angeordnet werden (nicht dargestellt). In Fig. 3 ist lediglich ein Schlitz 5 gezeichnet. Die weiteren Stellen, in denen, korrespondierend zu den pilzförmigen Elementen 4, weitere Schlitze 5 vorzusehen sind, sind mit Kreuzen markiert.

Die Form der Schlitze 5 wird an Hand der Fig. 4 näher beschrieben. Der Umriß des gezeigten Schlitzes 5 ist deckungsgleich mit dem Umriß der übrigen Schlitze 5, die sämtlich jeweils in der Richtung, in der die Verbindungsschiene 1 in ihre Bestimmungslage geschoben wird, mit einer vom Kopf des zugeordneten pilzförmigen Elementes 4 durchgreifbaren verbreiterten Ausnehmung 5a beginnen. In Fig. 4 ist in der verbreiterten Ausnehmung 5 der Durchmesser des Kopfes und der Durchmesser des Schaftes eines pilzförmigen Elementes 4 strichpunktiert eingezeichnet. An die verbreiterte Ausnehmung 5a schließt sich ein entgegengesetzt der verbreiterten Ausnehmung 5a mindestens einseitig konisch verengendes Mittelteil 5b an. Das konische Mittelteil 5b ist am Anfang breiter als der Stiel des zugeordneten pilzförmigen Elementes 4 und am Verjüngungsende noch so breit, daß der eingreifende Stiel des pilzförmigen Elementes 4 gerade noch nicht klemmt, wenn die Verbindungsschiene 1 in der begonnenen Schieberichtung weiter verschoben wird. In dieser Schieberichtung schließt sich an das konische Mittelteil 5b ein parallele, seitliche Begrenzungen aufweisender Endabschnitt 5c an, der mit wenig Spiel vom Stiel des pilzförmigen Elementes 4 durchgreifbar ist.

Zum lösbaren Verbinden der Schaltschränke 2,3, wird die dargestellte Verbindungsschiene 1 so auf die Schaltschränke 2,3 aufgelegt, daß die Köpfe der von ihr getragenen pilzförmigen Elemente 4 jeweils eine verbreiterte Ausnehmung 5a eines Schlitzes 5 durchgreifen. Wird nun die Verbindungsschiene 1 in der einzig möglichen Schieberichtung verschoben, hintergreift der Kopf des jeweiligen pilzförmigen Elementes 4 zunächst den konischen Mittelteil 5b des zugeordneten Schlitzes 5. Die Verbindungsschiene 1 ist hiernach schon gegen Abheben von den Schaltschränken 2,3 gesperrt, da die Köpfe der pilzförmigen Elemente 4 die jeweiligen Schlitze 5 bereits hintergreifen. Durch die konische Ausbildung der Mittelteile 5b der Schlitze 5, wird beim Weiterverschieben der Verbindungsschiene 1 ein möglicher Spalt im Bereich des Kopfstoßes der Schaltschränke 2,3 aufgehoben. Beim weiteren Verschieben der Verbindungsschiene 1 gelangen die Stiele der pilzförmigen Elemente 4 jeweils in den zugeordneten Endabschnitt 5c des jeweiligen Schlitzes 5. Die Verbindungsschiene 1 ist in ihrer Bestimmungslage, wenn die Stiele der pilzförmigen Elemente 4 an der Längsbegrenzung des Endabschnittes 5c ihres Schlit-) zes 5 anliegen. Um die Verbindungsschiene 1 in der Bestimmungslage zu sichern, wird die schon erwähnte Schraube durch ein Durchgangsloch 6 der Verbindungsschiene 1 hindurch in das ebenfalls schon erwähnte Muttergewinde eingeschraubt, das in der Kopfwand eines der Schaltschränke 2 oder 3 vorgesehen ist. Das Muttergewinde kann Teil einer in der Kopfwand des zugeordneten Schaltschrankes 2 oder 3 verankerten Mutter sein.

Zum Lösen der Verbindung ist es nur erforderlich, die einzige Schraube zu lösen und die Verbindungsschiene 1 soweit zurückzuschieben, bis die Köpfe der pilzförmigen Elemente 4 unter der verbreiterten Ausnehmung 5a des jeweils zugeordneten Schlitzes 5 liegen. Die Verbindungsschiene 1 kann sodann von den Schaltschränken 2,3 abgehoben werden.

## Patentansprüche

1. Vorrichtung zum lösbaren Verbinden zweier benachbarter elektrischer Schaltschränke, mit den Merkmalen:

a) es ist eine Verbindungsschiene (1) vorgesehen, mit der durch Verschieben längs des Stoßes der benachbarten Schaltschränke (2, 3) ein zwischen den Schaltschränken (2, 3) bestehender Stoßspalt aufhebbar ist;

b) die Verbindungsschiene (1) ist durch mindestens eine Schraubverbindung in ihrer Verbindungslage festhaltbar;

**gekennzeichnet durch** die Merkmale:

c) die Verbindungsschiene (1) liegt auf den Kopfwänden der benachbarten Schaltschränke (2, 3) auf;

d) die Verbindungsschiene (1) ist mittels pilzförmiger Elemente (4), ferner mittels von den Stielen der pilzförmigen Elemente (4) durchgreifbaren sowie von den Köpfen der pilzförmigen Elemente (4) teilweise hintergreifbaren Schlitzen (5) sowie mittels der Schraubverbindung mit den beiden Kopfwänden der Schaltschränke (2, 3) formschlüssig vereinigbar;

e) die pilzförmigen Elemente (4) sind wahlweise von der Verbindungsschiene (1) oder von den Kopfwänden der Schaltschränke (2, 3) getragen und in zwei parallelen Reihen derart angeordnet, daß der Kopfstoß der Schaltschränke (2, 3) schon zu Beginn des Verschiebens der Verbindungsschiene (1) von den beiden Reihen der pilzförmigen Elemente (4) flankiert ist;

f) die Schlitze (5) sind bei Anordnung der pilzförmigen Elemente (4) an der Verbindungsschiene (1) in die Kopfwände der Schaltschränke (2, 3) und bei Anordnung der pilzförmigen Elemente (4) an den Kopfwänden der Schaltschränke (2, 3) in die Verbindungsschiene (1) eingearbeitet;

g) jeder Schlitz (5) beginnt in Schieberichtung der Verbindungsschiene (1) mit einer vom Kopf des zugeordneten pilzförmigen Elemente (4) durchgreifenden verbreiterten Ausnehmung (5a), an die sich ein entgegengesetzt der verbreiteren Ausnehmung (5a) konisch verengendes Mittelteil (5b) anschließt, das in einem parallele seitliche Begrenzungen aufweisenden Endabschnitt (5c) mündet, der vom Schaft des jeweiligen pilzförmigen Elementes (4) in der Bestimmungslage der Verbindungsschiene (1) weitgehend spielfrei durchgreifbar ist;

h) die Schraubverbindung besteht aus einem in einer der Kopfwände der Schaltschränke (2, 3) angeordneten Muttergewinde und einer durch ein Durchgangsloch (6) in der Verbindungsschiene (1) in das Muttergewinde eindrehbaren Schraube;

i) die Verbindungsschiene (1) besteht aus einem rechteckigen Blechzuschnitt, der mindestens an seinen beiden Längskanten zur Versteifung etwa rechtwinklig umgebördelt ist;

j) die Verbindungsschiene (1) weist mindestens an einem Ende einen sich zwischen den beiden Bördelrändern erstreckenden hochgestellten Querrand (7) auf, der als Handhabe für das Verschieben der Verbindungsschiene (1) ausgebildet ist.

2. Vorrichtung nach Anspruch 1, **dadurch gekennzeichnet,** daß die pilzförmigen Elemente (4) aus Laschen bestehen, die je nach Lage des Schlitzes (5) aus den Kopfwänden der Schaltschränke (2, 3) oder aus der Verbindungsschiene (1) freigelegt und herausgebogen sind.

3. Vorrichtung nach Anspruch 1, **dadurch gekennzeichnet,** daß die pilzförmigen Elemente (4) aus rotationssymmetrischen Teilen bestehen, die an den Träger (1 oder 2, 3) angeschweißt oder angenietet oder mit dem Träger (1 oder 2, 3) verschraubt sind.

## Claims

1. Device for the releasable connection of two adjacent electrical switchgear cabinets, the features of which are:

a) a connecting bar (1) is provided whereby a butt clearance between the switchgear cabinets (2, 3) can be eliminated by sliding along the butt of the adjacent switchgear cabinets (2, 3);

b) the connecting bar (1) can be fixed in its position of connection by at least one threaded connection;

**characterised by** the features:

c) the connecting bar (1) rests on the end walls of the adjacent switchgear cabinets (2, 3);

d) the connecting bar (1) can be joined in a form-fitting manner by means of mushroom-shaped elements (4), and further by means of slots (5) through which the stems of the mushroom-shaped elements (4) can pass and which can be partially engaged at the back by the heads of the mushroom-shaped elements (4), as well as by means of the threaded connection, to the two end walls of the switchgear elements (2, 3);

e) the mushroom-shaped elements (4) are carried optionally by the connecting bar (1) or by the end walls of the switchgear cabinets (2, 3) and are arrranged in two parallel rows in such a way that the butt joint of the switchgear cabinets (2, 3) is already flanked by the two rows of mushroom-shaped elements (4) as soon as the connecting bar (1) begins to slide;

f) the slots (5) are provided in the end walls of the switchgear cabinets (2, 3) if the mushroom-shaped elements (4) are disposed on the connecting bar (1), and in the connecting bar (1) if the mushroom- shaped elements (4) are disposed on the end walls of the switchgear cabinets (2, 3);

g) each slot (5) begins in the slide direction of the connecting bar (1) with a widened recess (5a) through which the head of the associated mushroom-shaped element (4) can pass, connected to which recess is a middle portion (5b) which tapers conically away from the widened recess (5a), this middle portion (5b) opening into an end section (5c) with parallel lateral boundaries, which can be penetrated substantially without play by the stem of the corresponding mushroom-shaped element (4) when the connecting bar (12) is in its intended position;

h) the threaded connection comprises an internal screw thread disposed in one of the end walls of the switchgear cabinets (2, 3) and a screw which can be screwed into the internal thread through a passage (6) in the connecting bar (1);

i) the connecting bar (1) comprises a rectangular sheet metal blank which on at least its two longitudinal edges is flanged at roughly 90° for rigidity;

j) the connecting bar (1) has at least at one end an upwardly bent transverse edge (7) extending between the two flange edges which is designed as a handle for sliding the connecting bar (1).

2. Device according to claim 1, characterised in that the mushroom-shaped elements (4) comprise lugs which are exposed and bent out of the end walls of the switchgear cabinets (2, 3) or out of the connecting bar (1), depending on the location of the slot (5).

3. Device according to claim 1, characterised in that the mushroom-shaped elements (4) comprise rotationally symmetrical parts which are welded or riveted to the carrier (1 or 2, 3) or screwed on to it.

## Revendications

1. Dispositif pour réunir de façon détachable deux armoires électriques voisines, présentant les caractéristiques suivantes :

a) il est prévu un rail de raccordement (1), à l'aide duquel, sous l'effet de son déplacement le long de la zone d'aboutement des armoires électriques voisines (2,3), une fente d'aboutement existant entre ces armoires peut être supprimée;

b) le rail de raccordement (1) peut être maintenu fermement dans sa position de raccordement par au moins une liaison à vis;

caractérisé par les particularités suivantes :

c) le rail de raccordement (1) est situé sur les parois supérieures des armoires électriques voisines (2,3);

d) le rail de raccordement (1) peut être raccordé selon une liaison par formes complémentaires aux deux parois supérieures des armoires électriques (2,3), au moyen d'éléments en forme de champignons (4) et en outre au moyen de fentes (5) dans lesquelles peuvent pénétrer les pieds des éléments en forme de champignons (4) et dans lesquelles peuvent s'engager en partie les têtes des éléments en forme de champignons (4), ainsi qu'au moyen de la liaison à vis;

e) les éléments en forme de champignons (4) sont portés au choix par le rail de raccordement (1) ou par les parois supérieures des armoires électriques (2,3) et sont disposés suivant deux rangées parallèles de telle sorte que la zone d'aboutement supérieure des armoires électriques (2,3) est flanquée, déjà au début du déplacement du rail de raccordement (1), par les deux rangées d'éléments en forme de champignons (4);

f) les fentes (5) sont ménagées dans les parois supérieures des armoires électriques (2,3) lorsque les éléments en forme de champignons (4) sont disposés sur le rail de raccordement (1), et sont ménagées dans le rail de raccordement (1) lorsque les éléments en forme de champignons (4) sont prévus sur les parois supérieures des armoires électriques (2,3);

g) chaque fente (5) commence, dans la direction de déplacement du rail de raccordement (1), par une ouverture élargie (5a), que traverse la tête des éléments en forme de champignons (4) et à laquelle se raccorde une partie médiane (5b), qui se rétrécit avec une forme conique à l'opposé de l'ouverture élargie (5a) et qui débouche dans une section terminale (5c), qui possède des limites latérales parallèles et que peut traverser, dans une large mesure sans jeu, le pied de l'élément respectif en forme de champignon (4), lorsque le rail de raccordement (1) est dans la position spécifiée;

h) la liaison à vis est formée par un taraudage ménagé dans l'une des parois supérieures des armoires électriques (2,3) et par une vis pouvant être vissée dans le taraudage, en passant dans un trou (6) ménagé dans le rail de raccordement (1);

i) le rail de raccordement (1) est constitué par une pièce rectangulaire découpée en tôle, qui comporte un rebord approximativement rectangulaire au moins au niveau de ses bords longitudinaux, à titre de renforcement;

j) le rail de raccordement (1) possède, au moins à une extrémité, un bord transversal relevé (7), qui s'étend entre les deux rebords et est agencé sous la forme d'une poignée servant à déplacer le rail de raccordement (1).

2. Dispositif suivant la revendication 1, caractérisé par le fait que les éléments en forme de champignons (4) sont constitués par des pattes qui, en fonction de la position de la fente (5), sont dégagées et repliées à partir des parois supérieures des armoires électriques (2,3) ou à partir du rail de raccordement (1).

3. Dispositif suivant la revendication 1, caractérisé par le fait que les éléments en forme de champignons (4) sont constitués par des pièces à symétrie de révolution, qui sont soudées ou rivetées sur le support (1 ou 2, 3) ou sont vissées au support (1 ou 2, 3).

FIG 1

FIG 2

FIG 3

FIG 4